(19) **Europäisches Patentamt**

**European Patent Office**

**Office européen des brevets**

(11) **EP 0 559 071 B2**

(12) **NEUE EUROPÄISCHE PATENTSCHRIFT**

(45) Veröffentlichungstag und Bekanntmachung des Hinweises auf die Entscheidung über den Einspruch:
**18.12.2002 Patentblatt 2002/51**

(51) Int Cl.[7]: **B01D 53/86**, B01J 35/00

(45) Hinweis auf die Patenterteilung:
**13.12.1995 Patentblatt 1995/50**

(21) Anmeldenummer: **93102913.6**

(22) Anmeldetag: **25.02.1993**

(54) **Verfahren zum oxidativen Abbau von cyclischen organischen Verbindungen**

Process for the oxidative decomposition of cyclic organic compounds

Procédé pour la décomposition oxydative de composants organiques cycliques

(84) Benannte Vertragsstaaten:
**AT BE CH DE ES FR GB IT LI NL SE**

(30) Priorität: **03.03.1992 DE 4206599**

(43) Veröffentlichungstag der Anmeldung:
**08.09.1993 Patentblatt 1993/36**

(73) Patentinhaber: **BASF Aktiengesellschaft**
**67063 Ludwigshafen (DE)**

(72) Erfinder:
• **Hess, Klaus, Dr.**
  **W-6702 Bad Duerkheim (DE)**
• **Ruppel, Wilhelm, Dr.**
  **W-6552 Bad Muenster (DE)**

• **Morsbach, Bernd**
  **W-6700 Ludwigshafen (DE)**
• **Regenauer, Willi**
  **W-6701 Otterstadt (DE)**

(74) Vertreter: **Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(56) Entgegenhaltungen:
**EP-A- 0 402 122        WO-A-91/04780**

**Beschreibung**

Die vorliegende Erfindung betrifft ein Verfahren zum oxidativen Abbau von cyclischen organischen Verbindungen aus Abgasen von Verbrennungsanlagen unter Verwendung von Metalle und/oder Oxide enthaltenden Katalysatorelementen mit kanalförmigen Durchgangsöffnungen.

Verbrennungsabgase enthalten oft noch unverbrannte organische Verbindungen, die aus Gründen der Reduzierung der Umweltbelastung aus den Abgasen entfernt werden müssen.

Als besonders problematisch organische Verbindungen sind cyclische organische, halogenierte Verbindungen und insbesondere die polychlorierten Dibenzodioxine und Dibenzofurane (nachfolgend zusammenfassend "Dioxine" genannt) bekannt.

Zwar gibt es Möglichkeiten, die Bildung dieser Produkte unvollständiger Verbrennung durch Primärmaßnahmen zu reduzieren, wobei insbesondere die Verbrennungsbedingungen modifiziert werden (s. z.B. "Chemische Industrie" 7/90, S. 21 bis 25) oder auch die Bildung der Dioxine durch Zugabe von Triethanolamin und Triethylamin zum Rauchgas inhibiert werden kann (s. UWSF-Z. Umweltchem. Ökotox, 1989, 4, S. 3 bis 6).

Durch diese Maßnahmen werden jedoch die maximal zulässigen Werte an Dioxinen in der Abluft (0,1 ng TE/$m^3$; s. BlmSchV: "Entwurf einer 17. Verordnung zur Durchführung des Bundes-Immissionsschutzgesetzes", Mai 1990) nicht sicher unterschritten.

Es ist daher erforderlich, den Dioxingehalt durch einen oxidativen Abbau an entsprechenden Katalysatoren weiter zu verringern.

Dazu ist es aus der EP 252 521 A1, der EP 387 417 A1 und der DE 39 33 480 A1 bekannt, Metalle oder Oxide enthaltende Katalysatoren einzusetzen.

Bisher wurde bei der Entwicklung derartiger Katalysatoren der Schwerpunkt vor allem auf die Abhängigkeit der Abbauraten von der chemischen Zusammensetzung gelegt, d.h. die Aktivität des Katalysators stand neben verfahrenstechnischen Aspekten wie Temperatur und Raumgeschwindigkeit des Abgases im Vordergrund (s. VGB-Fachtagung "Thermische Abfallverwertung 1990", Essen 28.09.90; Referat "Katalytische Oxidation: Eine Technik zur Verminderung der PLDD/PCDF-Emission aus Müllverbrennungsanlagen auf kleiner 0,1 ng TE/$m^3$", H. Fahlenkamp, G. Mittelbach, H. Hagenmaier et al.). In diesem Zusammenhang wurde zwar auch auf die Katalysatoroberfläche pro Volumen hingewiesen, die Strukturierung der Katalysatoren an gleicher Stelle (s. DE 39 33 480 A1, S. 3) aber als nicht kritisch bezeichnet.

Der exakten Bestimmung der räumlichen Ausgestaltung von Katalysatorelementen kommt aber, jedenfalls wenn die erwähnten Mindestwerte erreicht werden sollen, eine zunehmende Bedeutung zu.

Katalysatorelemente für ein Verfahren zum oxidativen Abbau von cyclischen organischen Verbindungen aus Abgasen von Verbrennungsanlagen, die bezüglich der Katalysatorabmessungen optimiert sind, so daß die Werte an cyclischen organischen Verbindungen, insbesondere Dioxinen, in den Abgasen von Verbrennungsanlagen möglichst minimiert werden, sind solche mit kanalförmigen Durchgangsöffnungen, deren Katalysatorgeometrie der folgenden Gleichung (1) gehorcht:

$$\frac{x}{d^2} = \frac{1}{A} \cdot \frac{\bar{u}}{4\,D_T} \cdot \ln \frac{C_o}{C_x} \tag{1}$$

worin bedeuten

x =   Länge des Katalysatorelements
d =   hydraulischer Durchmesser der Durchgangsöffnung bzw. doppelter Plattenabstand
$\bar{u}$ =   mittlere Gasgeschwindigkeit
$D_T$ =   temperaturabhängiger Diffusionskoeffizient des Schadstoffes im Abgas
$C_o$ =   Eingangskonzentration des Schadstoffs
$C_x$ =   Konzentration des Schadstoffes nach der Länge x und der Parameter A in Abhängigkeit von der Form der kanalförmigen Durchgangsöffnung folgende Werte aufweist:

| Form | A |
|---|---|
| n-Eck (n = 3 bis ∞) | 1,2-4,4 |
| Platten | < 8,3 |

Der Erfindung liegt die Erkenntnis zugrunde, daß die Geschwindigkeit des oxidativen Abbaus von cyclischen organischen Verbindungen, insbesondere von Dioxinen, an Katalysatorelementen diffusionsbestimmt ist und die Reaktionsgeschwindigkeit des chemischen Abbaus der Verbindungen an der Oberfläche der Katalysatorelemente demgegenüber nicht ins Gewicht fällt.

Somit ist die Bestimmung der Katalysatorgeometrie aufgrund der oben angegebenen Gleichung ohne weiteres möglich, was für die Auslegung von Katalysatorelementen von besonderer Bedeutung ist.

Der Maximalwert für A orientiert sich an den für die ausgebildete laminare Strömung geltenden "Sherwood-Zahlen" $Sh\alpha$, die für die jeweiligen Kanalgeometrien in folgender Tabelle aufgeführt sind:

| Kanalgeometrie | $Sh\alpha$ |
|---|---|
| 3-Eck | 2,05 |
| 4-Eck | 2,98 |
| 6-Eck | 3,35 |
| Kreis | 3,65 |
| Platte | 7,54 |

Die in der Gleichung stehenden Bestimmungsgrößen sind für ein vorgegebenes Verfahren bekannt ($C_x$, $C_o$, $\bar{u}$) oder sind Stoffkonstanten ($D_T$). Der hydraulische Durchmesser des n-Ecks (d = 4F/U, F = Fläche und U = Umfang der Durchgangsöffnung) bzw. der Plattenabstand im Fall des Plattenkatalysators und die Länge des Katalysatorelements können daher in Abhängigkeit des Parameters A berechnet werden. Die empirisch ermittelten Bereichsgrenzen für A sind im angegebenen Umfang im wesentlichen bestimmt durch die Analysengenauigkeit bei der Messung der einzelnen Werte.

Der Parameter A weist dabei in Abhängigkeit von der Form der kanalförmigen Durchgangsöffnung folgende Werte auf:

| Form | A |
|---|---|
| 3-Eck | 1,2-2,8 |
| 4-Eck | 2,2-3,8 |
| 6-Eck | 2,5-4,2 |
| Kreis | 2,8-4,4 |
| Platten | < 8,3 |

Die Desaktivierung der Katalysatoren und/oder die Anwesenheit von Staub im Abgas können noch zu einer weiteren Verringerung der Werte für A führen.

Wenn es sich um im wesentlichen staubfreie Abgase (Staubbelastung: 0-30 mg/$Nm^3$) handelt, d.h. z.B. Abgase nach E-Filter oder Rauchgasreinigung, ergeben sich für A folgende Mindestwerte: 3-Eck: 1,5; 4-Eck: 2,4; 6-Eck: 2,8; Kreis: 3,0; Platten: 4,0.

Gegenstand der Erfindung ist ein Verfahren zum oxidativen Abbau von cyclischen organischen Verbindungen in Abgasen von Verbrennungsanlagen im Temperaturbereich von 100°C-500°C unter Verwendung eines Katalysators, bei dem Umsatz U, Verweilzeit $\tau$ und die Geometrie des eingesetzten Katalysators der folgenden Gleichung (2) gehorchen

$$\frac{-\ln(1-U)}{\tau} = 4\,D_T \cdot \frac{A}{d^2} \qquad (2)$$

worin bedeuten

U = Umsatz an Schadstoffen (= $1 - \frac{C_x}{C_o}$)

$\tau$ = Verweilzeit ( = $x/\bar{u}$ mit $\bar{u}$ = mittlere Gasgeschwindigkeit)

und $D_T$, d sowie A in Abhängigkeit von der Form der kanalförmigen Durchgangsöffnung wie oben definiert sind.

Diese Gleichung (2) ist aus der oben zum Katalysator angegebenen Gleichung (1) entwickelt.

Mit der vorliegenden Erfindung ist es möglich, präzise Angaben zur erforderlichen Katalysatorgeometrie zu machen.

Als cyclische organische Verbindungen sind sowohl aromatische als auch aliphatische cyclische Verbindungen zu nennen, auch heterocyclische oder substituierte cyclische Verbindungen werden abgebaut. Insbesondere werden mit den erfindungsgemäßen Katalysator bzw. Verfahren halogenierte Verbindungen, die auch mehrkernig sein können, z.B. polychlorierte Biphenyle, aber auch z.B. Phenole abgebaut. Besonders gut geeignet ist der erfindungsgemäße Katalysator bzw. das erfindungsgemäße Verfahren für den Abbau der bereits oben genannten Dioxine.

Zu den oben angegebenen Bestimmungsgrößen ist im einzelnen folgendes festzustellen: $C_x$ und $C_o$ werden in Nanogramm pro Normkubikmeter (ng/Ncbm) angegeben, wobei die Bestimmung der Dioxinkonzentrationen auf übliche Weise erfolgt. Der temperaturabhängige Diffusionskoeffizient $D_T$ wird auf bekannte Weise ermittelt (vgl. z.B. VDI-Wärmeatlas, 4. Auflage, 1988, Da 32/Da 33) und beträgt zum Beispiel bei 303°C für Tetrachlordibenzodioxin 0,175 $cm^2$/s, für Hexachlordibenzodioxine 0,163 $cm^2$/s, für Octachlordibenzodioxine 0,153 $cm^2$/s und für Hexachlordibenzofurane 0,165 $cm^2$/s.

Da im Abgas meist ein Gemisch verschiedener Dioxine vorliegt, empfiehlt es sich, den kleinsten Diffusionskoeffizienten der Berechnung zugrunde zulegen, um den Abbau der entsprechenden Dioxine jedenfalls zu gewährleisten.

Die mittlere Gasgeschwindigkeit $\bar{u}$ ergibt sich aus dem Quotienten $V_R$/AF, wobei $V_R$ = Volumenstrom des Abgases in $m^3$/h und AF = angeströmte Fläche bedeuten. Die angeströmte Fläche wiederum errechnet sich aus der Gesamtquerschnittsfläche des Katalysatorelements (die z.B. durch die Herstellung oder den Reaktor vorgegeben ist) geteilt durch das Öffnungsverhältnis $\varepsilon$, das z.B. 0,6 beträgt, wenn 60 % der Fläche aus Öffnungen bestehen. Das Öffnungsverhältnis $\varepsilon$ wird somit bestimmt durch das Verhältnis von freiem Querschnitt zu gesamten Querschnitt.

Die mittlere Gasgeschwindigkeit $\bar{u}$ bei dem erfindungsgemäßen Verfahren liegt im allgemeinen im Bereich von 5-10 m/s.

Die Größe d bezeichnet den hydraulischen Durchmesser, wenn es sich beim Querschnitt der kanalförmigen Durchgangsöffnungen um reguläre n-Ecke und Kreise handelt. So ist der hydraulische Durchmesser für quadratförmige Durchgangsöffnungen z.B. $d = 4 \cdot a^2/4a = a$ (a = Kantenlänge). Wenn es sich um einen Plattenkatalysator handelt, bezeichnet d den doppelten Plattenabstand.

Die Katalysatorelemente mit kanalförmigen Durchgangsöffnungen können jede beliebige Geometrie aufweisen, vorausgesetzt, das Katalysatorelement gehorcht den oben angegebenen Bedingungen. So sind die an sich bekannten wabenförmigen Katalysatoren, aber auch Plattenkatalysatoren möglich. Die Wabenkanäle können die Form der angegebenen Vielecke aufweisen, aber auch runde oder abgerundete Kanalformen sind möglich.

Die beiden angegebenen Gleichungen (1) und (2) leiten sich von der für den Wärmeübergang bei laminarer Strömung im Rohr entwickelten, lange bekannten Formel

$$C = C_o \exp \left( -Sh \cdot \frac{4 \, D_x}{\bar{u} d^2} \right)$$

(Graetz, Ann. Phys., 18 (1883) 79/94, 25 (1885) 337/357; Nusselt, Z.VDI 54 (1910) 1154/1158) ab.

Die Zahl der Durchgangsöffnung entspricht dem Quadrat der Zellenzahl z und kann je nach Staubgehalt des Abgases variiert werden, wobei z.B. für quadratische Durchgangsöffnungen folgenden Abhängigkeit gilt:

$$a = \frac{b}{z} \sqrt{\varepsilon} \qquad (3)$$

worin bedeuten

a = Zellöffnung (d.h. Kantenlänge der Durchgangsöffnung)
b = Kantenlänge des Katalysatorelements
z = Zellenzahl (Zahl der Durchgangsöffnungen entlang einer Kantenlänge des Katalysatorelements)
$\varepsilon$ = Öffnungsverhältnis,

| | |
|---|---|
| wobei für ein weitgehend staubfreies Abgas | $40 \leqq z \leqq 50$ |
| für ein geringfügig mit Staub beladenes Abgas | $39 \leqq z \leqq 25$ |
| und für ein stark mit Staub beladenes Abgas: | $24 \leqq z \leqq 20$ |

gilt.
Als weitgehend staubfreies Abgas kann ein Abgas bezeichnet werden, daß 0-30 mg Staubteilchen pro Norm-

kubikmeter (mg/Nm$^3$) aufweist, für das geringfügig belastete Abgas kann als Orientierungswert 30-500 mg/Nm$^3$ angegeben werden und Abgase mit Staubbelastungen über 500 mg/Nm$^3$ sind als stark belastete Abgase anzusehen.

Im Katalysatorelement ist ein möglichst geringer Druckverlust anzustreben. Für diesen Druckverlust läßt sich folgende Gleichung (4) angeben

$$\Delta p = \varphi \cdot 32 \cdot \eta \cdot \bar{u} \cdot \frac{x}{d^2} \qquad (4)$$

worin $\eta$ = dynamische Zähigkeit des Abgases und $\bar{u}$, x sowie d wie oben definiert sind und für den Parameter $\varphi$ gilt: $0,89 \leqq \varphi \leqq 1,5$ (vgl. VDI-Wärmeatlas, 4. Auflage 1983, 267).

Für das erfindungsgemäße Verfahren gilt allgemein, daß die Adsorption der cyclischen organischen Verbindungen am Katalysatorelement, unabhängig von der Zusammensetzung der Aktivmasse, stets so schnell ist, daß im wesentlichen nur der diffuse Stofftransport in der laminaren Kanalströmung maßgebend für die Geschwindigkeit des oxidativen Abbaus der Schadstoffe am Katalysatorelement ist. Die Effektivität der Katalysatorelemente wird somit wesentlich durch die Formgebung bestimmt, wobei kanalförmige Durchgangsöffnungen in Form von regulären 6-Ecken besonders günstig sind.

Aufgrund dieser Erkenntnis ist es möglich, für den Katalysator und das erfindungsgemäße Verfahren die Gleichungen (1) bis (4) aufzustellen, die keinerlei Information über die adsorbtiven und kinetischen Eigenschaften der Katalysatormasse enthalten.

Damit besteht für das erfindungsgemäße Verfahren ein prinzipieller Unterschied etwa zur katalytischen Reduktion von Stickoxiden mit NH$_3$ an derartigen Katalysatoren (SCR-Reaktion), da bei dieser Reduktion sowohl der diffusive Stofftransport als auch die Thermodynamik der NH$_3$-Adsorption und die Kinetik der SCR-Reaktion an der Katalysatormasse beachtet werden müssen.

Als Katalysatormaterial sind die bekannten Materialien für Oxidationskatalysatoren, die Metalle und/oder Oxide enthalten, einsetzbar. Da wie dargelegt, gefunden wurde, daß der Abbau von mehrkernigen cyclischen organischen Verbindungen in erster Linie von der Diffusion in den Katalysatorkanälen und nicht von der Aktivität des Katalysators abhängt, ist die Auswahl des Katalysatormaterials nicht kritisch.

Es können z.B. Materialien auf der Basis von TiO$_2$, SiO$_2$ oder Eisenoxiden eingesetzt werden, die als zusätzliche Komponente Cr-, W-, Mo- oder V-Oxide enthalten können. Derartige Katalysatoren sind im Stand der Technik mehrfach beschrieben, siehe z.B. EP-A-252 521, EP-A-387 417 oder DE 38 04 722 A1, worauf ausdrücklich Bezug genommen wird.

Bevorzugt sind Katalysatorelemente, deren oxidische Bestandteile nur 0,01-1,0 Gew.-% oder bevorzugt kein Vanadiumoxid enthalten und im übrigen aus 50-90 Gew.-% TiO$_2$, 2-15 Gew.-% WO$_3$ und/oder MoO$_3$ und 1-40 Gew.-% Füllstoffen, wie z.B. Kieselsäuren, Aluminiumoxid, Zeolithen, Bentoniten, Alumosilikaten (Tone, Kaolin) bestehen.

Die Katalysatormaterialien können aber auch noch Metalle oder Metallsalze enthalten, z.B. Platin oder Palladium, oder Erdalkalimetallsulfate, insbesondere BaSO$_4$, wozu auf die DE 35 31 871 C2 und die US-A-4 929 586 Bezug genommen wird.

Als geeignetes Katalysatormaterial haben sich auch die zum Abbau von NO$_x$ in Abgasen beschriebene Katalysatorzusammensetzungen herausgestellt, die TiO$_2$ sowie eine Mischung weitere Metalloxide enthalten. Hierzu wird auf die DE-B-24 58 888 ausdrücklich Bezug genommen.

Die Katalysatormassen können weiterhin die bekannten Verarbeitungshilfsmittel enthalten (s. z.B. DE 39 06 136 C1).

Dabei muß das Katalysatorelement nicht insgesamt aus den genannten Materialien bestehen. Auch nur mit Katalysatormasse beschichtete Elemente, d.h. vorgeformte Träger, z.B. aus Metall oder Keramik, deren Oberfläche zumindest teilweise mit Katalysator bedeckt ist, fallen unter die Erfindung.

Bei den Verbrennungsanlagen kann es sich um Müllverbrennungsanlagen, Kraftwerke, Rückstandsverbrennungsanlagen oder Prozeßöfen handeln.

Das erfindungsgemäße Verfahren wird im Temperaturbereich von 100°C bis 500°C durchgeführt.

Mit den Katalysatoren ist es somit möglich, die Temperaturen im Reaktor, der den Katalysator enthält, bis auf 100°C zu senken oder den Gehalt an aktiven Bestandteilen (z.B. V$_2$O$_5$) im Katalysatormaterial entsprechend zu verringern.

Die Katalysatoren mit der Geometrie benötigen daher kein V$_2$O$_5$ oder weisen V$_2$O$_5$-Gehalte von 0,05 bis 1,0 Gew.-% auf, was insbesondere wegen der dann geringeren SO$_2$/SO$_3$-Konversionsrate von Vorteil ist.

Das erfindungsgemäße Verfahren wird als "Intervall-Verfahren" ausgeführt.

Das heißt, daß in zwei aufeinanderfolgenden Schritten bei verschiedenen Temperaturen gearbeitet wird. Im ersten Schritt werden die Schadstoffe bei tiefer Temperatur vorwiegend adsorbiert und im zweiten Schritt wird bei im Vergleich zum ersten Schritt erhöhter Temperatur der Abbau durchgeführt. Die Temperaturen in den beiden Schritten unterscheiden sich zweckmäßig um mindestens 50°C, insbesondere beträgt die Temperatur im ersten Schritt 100°C-250°C und im zweiten Schritt 300°C-500°C. Um zu verhindern, daß beim Aufheizen Schadstoffe desorbiert werden, ohne abgebaut zu werden, ist es bevorzugt, mindestens zwei Katalysatorelemente hintereinander zu schalten, wobei die Adsorption bei tiefer Temperatur nur soweit erfolgt, daß im letzten Katalysatorelement keine oder nur eine geringe Schadstoffadsorption stattfindet und beim Aufheizen dann dieses letzte Element zuerst aufgeheizt wird.

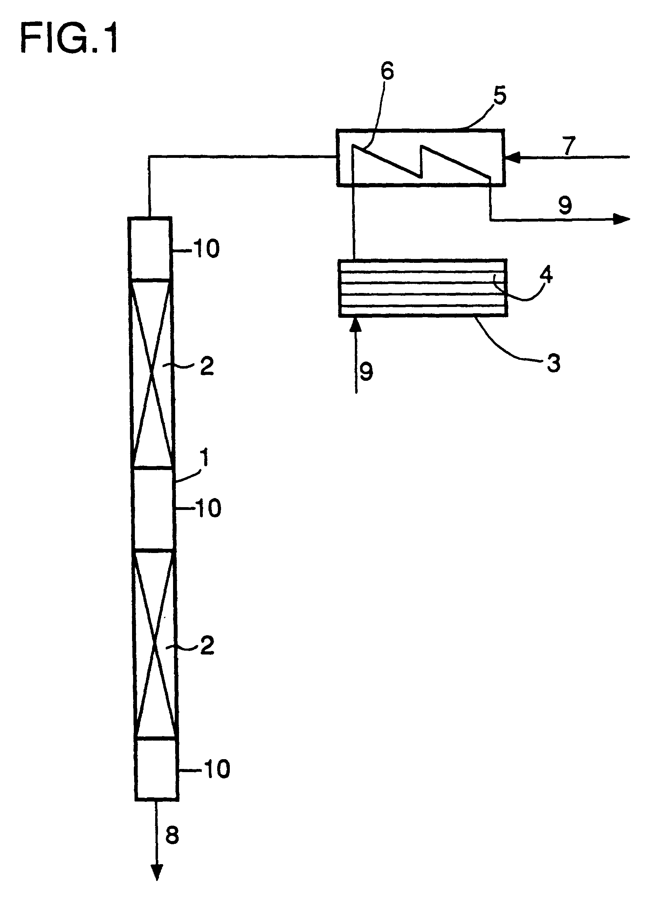

Die Fig. 1 zeigt schematisiert eine entsprechende Versuchsanlage mit einem Reaktor (1), der den Katalysator (2) enthält. Der Teilrauchgasstrom (7) wird durch einen Rohrbündel-Wärmetauscher (5) mit Rohren (6) geführt, wobei das Rauchgas (7), das die Rohre (6) umströmt, durch heiße Luft (9), die in einem Elektrovorwärmer (3) mit Heizstäben (4) erzeugt und durch die Rohre (6) geleitet wird, aufgeheizt werden kann. Nach Abreinigung verläßt der Reingasstrom (8) die Anlage. In der Anlage befinden sich Meßstellen (10), um den Gehalt der abzubauenden cyclischen organischen Verbindungen zu ermitteln.

Beispiele (nicht erfindungsgemäss)

Die Versuche wurden in Müll- und Rückstandsverbrennungsanlagen durch Entnahme eines Dioxin beladenen Teilrauchgasstromes (7) nach E-Filter bzw. nach Rauchgaswäsche durchgeführt, wobei entsprechend Fig. 1 in der Schaltung nach Wäsche das Rauchgas auf Temperaturen zwischen der Kühlgrenztemperatur und 360 °C aufgeheizt wurde. Dies geschah indirekt, indem in einem Sekundärkreislauf mittels des mit Induktionsstäben beheizten Elektrovorwärmers (3) heiße Luft (9) durch den im Rauchgasstrom angeordneten Rohrbündelwärmetauscher (5) geschickt wurde, dessen Rohrbündel (6) vom Teilrauchgasstrom umströmt wurde. Mit dieser Art der Rauchgaswiederaufheizung wurde die "Übertemperatur" der Rohre klein gehalten, so daß die Wandtemperatur der "Heizrohre" nur um etwa 30°C über der jeweils gewünschten Rauchgastemperatur lag.

Das so aufgewärmte, Dioxin beladene Gas strömte dann in den mit Katalysator gefüllten Reaktor (1), der aus 2 Katalysatorebenen (2) mit jeweils 1 oder 4 Katalysatorelementen von je 150 mm Kantenlänge (quadratisch) bestückt war und verließ weitgehend Dioxin-frei als Gasstrom (8) den Reaktor (1). Als weiterer wichtiger Effekt wird nach Maßgabe der möglichen $NH_3$-Zudosierung im Rauchgasstrom (7) zunächst befindliches NOx praktisch quantitativ umgesetzt.

Dioxin wurde vor und hinter dem Katalysator gemessen (10).

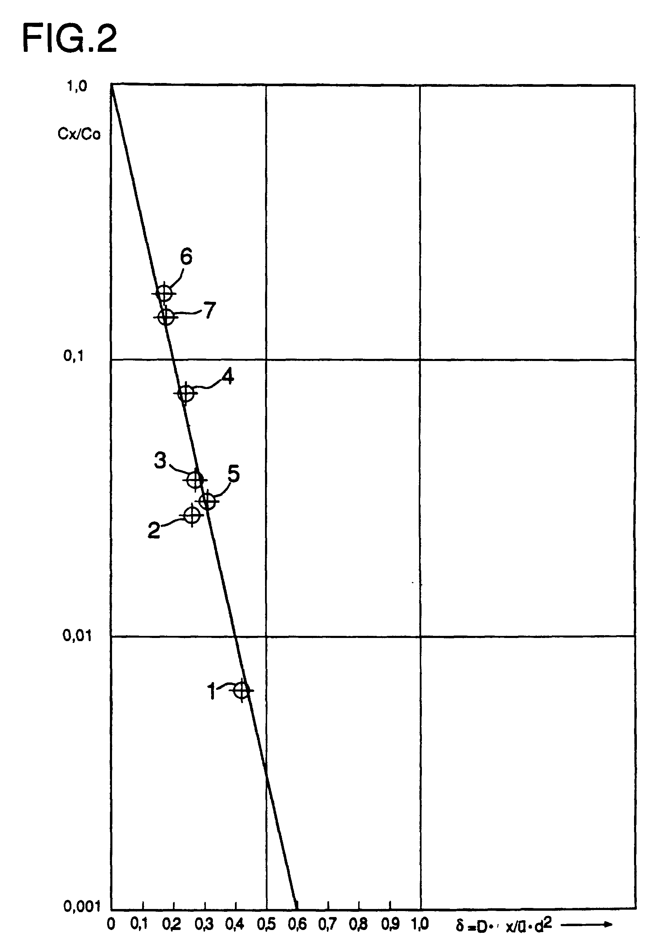

Die Ergebnisse der Beispiele 1 bis 7 für verschiedene Katalysatortypen, Rauchgasvolumenströme, -temperaturen, Ein- und Austrittskonzentrationen, Katalysatorlängen, spezifische Oberflächen, Öffnungsverhältnisse und Öffnungsdurchmesser finden sich in Tabelle 1. Fig. 2 gibt die Auswertung der entsprechenden Gleichungen (1) und (2) wieder, wobei in einer halblogarithmischen Darstellung $C_x/C_o$ als Ordinate und $\delta = D \cdot x/\bar{u} \cdot d^2$ als Abszisse gewählt wurden.

Die spezifische Oberfläche des Wabenkatalysators lag zwischen 545 und 784m $m^2/m^3$, die Geschwindigkeit in der Wabe (mittlere Gasgeschwindigkeit $\bar{u}$) zwischen 2,63 und 7,98 m/s (bei Betriebstemperatur), die Temperatur zwischen 250 ° C und 300 ° C.

Wie aus Fig. 2 ersichtlich, ordnen sich in der entsprechend Gleichung (1) gewählten Darstellung die Meßpunkte gut auf einer Geraden mit der Steigung 4A ein, wenn A = 2,98 ist. Die in Fig. 2 wiedergegebenen Meßpunkte entsprechen dabei den Beispielen 1 bis 7 aus der Tabelle.

Tabelle

| Beispiele | | 1 | 2 | 3 | 4 | 5 | 6 | 7 |
|---|---|---|---|---|---|---|---|---|
| Rauchgasvolumen-strom VR | $m^3/h$ | 63 | 709 | 698 | 743 | 153,18 | 189 | 184,5 |
| Temperatur t | °C | 300 | 274 | 303 | 250 | 320 | 290 | 300 |
| Eintrittskonzen-tration* Co | $ng/m^3$ | 2,7 | 1,643 | 1,646 | 1,114 | 1,788 | 0,17 | 0,035 |
| Austrittskonzen-tration* $C_x$ | $ng/m^3$ | 0,017 | 0,044 | 0,059 | 0,084 | 0,053 | 0,03 | 0,005 |
| Katalysatorlänge ges., X | m | 1,84 | 1,84 | 1,84 | 1,84 | 1,84 | 2 | 2 |
| Katalysatorquer-schnitt AF | $m^2$ | 0,02 | 0,074 | 0,074 | 0,074 | 0,018 | 0,0225 | 0,0225 |
| Spezifische Oberfläche AS | $m^2/m^3$ | 545 | 784 | 784 | 784 | 784 | 545 | 545 |
| Öffnungsverhält-nis $\epsilon$ | – | 0,698 | 0,698 | 0,698 | 0,698 | 0,698 | 0,698 | 0,698 |
| Öffnung $\alpha$ (hydraul. Durchm., d) | m | 0,00498 | 0,00357 | 0,00357 | 0,00357 | 0,00357 | 0,00498 | 0,00498 |

EP 0 559 071 B2

## Abgeleitete Größen

| | | | | | | | | |
|---|---|---|---|---|---|---|---|---|
| Raumgeschwindig- keit SV | 1/h | 1712 | 5207 | 5126 | 5457 | 4625 | 4200 | 4100 |
| Flächengeschwin- digkeit AV | m/h | 3,14 | 6,64 | 6,54 | 6,96 | 5,90 | 7,71 | 7,52 |
| 1/AV | | 0,318 | 0,151 | 0,153 | 0,144 | 0,170 | 0,130 | 0,133 |
| Geschwindigkeit in der Wabe, $\bar{u}$ | m/s | 2,63 | 7,69 | 7,98 | 7,71 | 7,41 | 6,98 | 6,94 |
| $C_x/C_o$* | – | 0,006 | 0,027 | 0,036 | 0,075 | 0,030 | 0,176 | 0,143 |
| ln $(C_x/C_o)$* | – | -5,068 | -3,620 | -3,329 | -2,985 | -3,519 | -1,735 | -1,946 |

| | | | | | | | | |
|---|---|---|---|---|---|---|---|---|
| Diffusionskoef- fizienten $D_T$ | $cm^2/s$ | 0,152 | 0,140 | 0,153 | 0,129 | 0,161 | 0,147 | 0,152 |

## Dimensionslose Kennzahlen

| | | | | | | | | |
|---|---|---|---|---|---|---|---|---|
| Dimensionslose Länge, $\delta$ | – | 0,427 | 0,262 | 0,277 | 0,242 | 0,314 | 0,170 | 0,176 |
| A | – | 2,964 | 3,451 | 3,005 | 2,671 | 2,804 | 2,555 | 2,761 |

\*      TCDD-Äquivalente nach NATO/CCMS

**Patentansprüche**

1. Verfahren zum oxidativen Abbau von cyclischen organischen Verbindungen in Abgasen von Verbrennungsanlagen, das im Temperaturbereich von 100°C bis 500°C unter Verwendung eines Katalysatorelements durchgeführt wird, der Umsatz an Schadstoffen, die Verweilzeit des Abgases im Katalysatorelement und die Abmessungen des Katalysators der folgenden Gleichung (2) gehorchen:

$$\frac{-\ln(1-U)}{\tau} = 4\, D_T \cdot \frac{A}{d^2} \tag{2}$$

worin bedeuten

$U$ = Umsatz an Schadstoffen
$\tau$ = Verweilzeit
$D_T$ = temperaturabhängiger Diffusionskoeffizient des Schadstoffes im Abgas
$d$ = hydraulischer Durchmesser der Durchgangsöffnung für n-Eck-förmige Durchgangsöffnungen oder doppelter Plattenabstand für plattenförmige Katalysatorelemente

und der Parameter A in Abhänigkeit von der Form der kanalförmigen Durchgangsöffnung folgende Werte aufweist:

| Form | A |
|---|---|
| n-Eck (n = 3 bis ∞) | 1,2-4,4 |
| Platten | < 8,3 |

**dadurch gekennzeichnet, daß** es in zwei aufeinanderfolgenden Schritten bei verschiedenen Temperaturen durchgeführt wird, wobei im ersten Schritt bei tiefer Temperatur vorwiegend absorbiert und im zweiten Schritt bei gegenüber dem ersten Schritt erhöhter Temperatur die Schadstoffe oxidativ abgebaut werden.

2. Verfahren nach Anspruch 1, **dadurch gekennzeichnet, daß** im ersten Schritt bei 100°C-250°C vorwiegend absorbiert und im zweiten Schritt bei 300°C-500°C oxidativ abgebaut wird.

3. Verfahren nach Anspruch 1, **dadurch gekennzeichnet, daß** der Parameter A in Abhängigkeit von der Form der Kanalförmigen Durchgangsöffnung folgende Werte aufweist:

| Form | A |
|---|---|
| 4-Eck | 2,2-3,8 |
| 6-Eck | 2,5-4,2 |
| Platten | < 8,0 |

**Claims**

1. A process for the oxidative degradation of cyclic organic compounds in offgases from incineration plants, which is carried out at from 100 to 500 °C using a catalyst element, the conversion of pollutants, the residence time of the offgas in the catalyst element and the dimensions of the catalyst being in accordance with the following equation (2):

$$\frac{-\ln(1-U)}{\tau} = 4\, D_T \cdot \frac{A}{d^2} \tag{2}$$

where

$U$ = conversion of pollutants,
$\tau$ = residence time,
$D_T$ = temperature-dependent diffusion coefficient of the pollutant in the offgas,

d = hydraulic diameter of the through-hole for polygonal through-holes or twice the plate separation for plate-like catalyst elements,

and the parameter A has the following values, depending on the shape of the channel-like through-hole:

| Shape | A |
|---|---|
| Polygonal (n = 3 to ∞) | 1.2-4.4 |
| Plates | < 8.3 |

wherein the process is carried out in two consecutive steps at different temperatures, where the first step involves predominantly absorption at low temperature, and the second step involves oxidative degradation of the pollutants at elevated temperature relative to the first step.

2. A process as claimed in claim 1, wherein the first step involved predominantly absorption at 100-250 °C, and the second step involves oxidative degradation at 300-500 °C.

3. A process as claimed in claim 1, wherein the parameter A has the following values, depending on the shape of the channel-like through-hole:

| Shape | A |
|---|---|
| rectangular | 2.2-3.8 |
| hexagonal | 2.5-4.2 |
| plates | < 8.0 |

**Revendications**

1. Procédé pour la dégradation oxydante de composés organiques cyclique dans des gaz résiduaires d'installations de combustion, que l'on met en oeuvre dans une plage de températures de 100 °C à 500 °C, en recourant à l'emploi d'un élément de catalyseur, la conversion des substances toxiques ou nuisibles, la durée de séjour du gaz résiduaire dans l'élément de catalyseur et les dimensions du catalyseur, satisfont à l'équation (2) qui suit:

$$\frac{-\ln(1-U)}{\tau} = 4\,D_T \cdot \frac{A}{d^2} \tag{2}$$

dans laquelle

U représente la conversion des substances toxiques ou nuisibles
$\tau$ représente la durée de séjour
$D_T$ représente le coefficient de diffusion dépendant de la température de la substance nuisible ou toxique dans le gaz résiduaire
d représente le diamètre hydraulique de l'ouverture de passage pour des ouvertures de passage de forme n polygonale, ou une double distance de plaques pour des éléments de catalyseur en forme de plaque

et le paramètre A présente, en fonction de la forme de l'ouverture de passage en forme de canal, les valeurs ci-dessous:

| forme | A |
|---|---|
| n-polygone (n = 3 à ∞) | 1,2-4,4 |
| plaques | < 8,3 |

**caractérisé en ce qu'**on l'entreprend en deux étapes qui se suivent l'une l'autre à des températures différentes, où, au cours de la première étape, on absorbe principalement les substances toxiques ou nuisibles à basse température et, au cours de la seconde étape, on dégrade par voie oxydante les substances toxiques ou nuisibles à température plus élevée par rapport à celle de la première étape.

2. Procédé suivant la revendication 1, **caractérisé en ce que**, au cours de la première étape, on procède principalement à l'absorption à 100 °C - 250 °C et, au cours de la seconde étape, on procède à la dégradation oxydante à 300-500 °C.

3. Procédé suivant la revendication 1, **caracterisé en ce que** le paramètre A présente, en fonction de la forme de l'ouverture de passage en forme de canal, les valeurs ci-dessous:

| forme | A |
|---|---|
| 4-polygone | 2,2-3,8 |
| 6-polygone | 2,5-4,2 |
| plaques | < 8,0 |

# FIG.1

# FIG.2